(19) Europäisches Patentamt
European Patent Office
Office européen des brevets

(11) **EP 1 796 947 B1**

(12) **EUROPÄISCHE PATENTSCHRIFT**

(45) Veröffentlichungstag und Bekanntmachung des Hinweises auf die Patenterteilung:
**30.01.2008 Patentblatt 2008/05**

(21) Anmeldenummer: **05792056.3**

(22) Anmeldetag: **26.09.2005**

(51) Int Cl.:
**B62D 5/00** (2006.01)

(86) Internationale Anmeldenummer:
**PCT/EP2005/054817**

(87) Internationale Veröffentlichungsnummer:
**WO 2006/035016 (06.04.2006 Gazette 2006/14)**

(54) **VERFAHREN ZUM BESTIMMEN EINES LENKWINKELS**

METHOD FOR DETERMINATION OF A STEERING ANGLE

PROCEDE POUR DETERMINER UN ANGLE DE BRAQUAGE

(84) Benannte Vertragsstaaten:
**DE FR**

(30) Priorität: **28.09.2004 DE 102004046937**
**26.09.2005 DE 102005046014**

(43) Veröffentlichungstag der Anmeldung:
**20.06.2007 Patentblatt 2007/25**

(73) Patentinhaber: **Continental Teves AG & Co. oHG**
**60488 Frankfurt (DE)**

(72) Erfinder:
• **BÖHM, Jürgen**
**65558 Oberneisen (DE)**
• **SCHIRLING, Andreas**
**64319 Pfungstadt (DE)**
• **MUTH, Norman**
**65066 Frankenberg (DE)**

(56) Entgegenhaltungen:
**EP-A- 1 384 651**     **DE-A1- 10 032 340**

**Beschreibung**

Die Erfindung betrifft ein Verfahren zum Bestimmen eines Lenkwinkels in einem Lenksystem, das mit einem durch einen Stellmotor gesteuerten Überlagerungsgetriebe ausgestattet ist, mit dem getriebeausgangsseitig ein sich aus einem getriebeeingangsseitig eingestellten Lenkradwinkel und aus einem mittels des Stellmotors eingesteuerten Zusatzlenkwinkel zusammensetzender Summenlenkwinkel an einem getriebeausgangsseitigen Teil einer Lenkwelle einstellbar ist, wobei der Stellmotor in einem ausgeschalteten Zustand des Lenksystems verriegelt ist und wobei der Lenkradwinkel mit einem getriebeeingangsseitig angeordneten Lenkradwinkelgeber erfasst wird.

Aus der DE 10032340A1 ist bekannt, Eingriffe in das Lenksystem eines Kraftfahrzeugs mittels einer so genannten Überlagerungslenkung vorzunehmen. Dabei greift ein Stellmotor über ein Überlagerungsgetriebe in den Lenkstrang ein, wodurch zusätzlich zu dem durch den Fahrer des Kraftfahrzeugs eingestellten Lenkwinkel ein weiterer Lenkwinkel unabhängig von der Fahrervorgabe eingestellt werden kann.

Der Lenkwinkel an den lenkbaren Rädern des Fahrzeugs ergibt sich bei dem mit einer Überlagerungslenkung ausgestatten Lenksystem somit aus der Summe des von dem Fahrer eingestellten Lenkwinkels und des mittels des Stellmotors eingestellten Zusatzlenkwinkels und wird daher im Folgenden als Summenlenkwinkel bezeichnet.

Der Zusatzlenkwinkel kann beispielsweise durch einen elektronischen Regler berechnet werden und ermöglicht es, den Fahrer bei der Kursführung zu unterstützen. So kann mittels des Zusatzlenkwinkels eine geschwindigkeitsabhängige Übersetzung zwischen dem Lenkradwinkel und dem Radeinschlagswinkel realisiert werden, oder es kann ein Fahrdynamikregler eingesetzt werden, der einen Solllenkwinkel ermittelt, mit dem in unkritischen Fahrsituationen die Agilität des Fahrzeugs und in kritischen Fahrsituationen die Fahrzeugstabilität verbessert wird. Die Differenz zwischen dem Solllenkwinkel und der mittels eines Lenkwinkelgebers gemessenen Lenkvorgabe des Fahrers bestimmt dabei den Zusatzlenkwinkel, der mittels der Überlagerungslenkung in den Lenkstrang eingesteuert wird.

Die Auflösung bei der Lenkwinkelmessung bestimmt dabei die Schrittweite, mit welcher der Zusatzlenkwinkel dem von dem Fahrer eingestellten Lenkradwinkel angepasst wird. Ist diese zu groß, spürt der Fahrer die schrittweise Veränderung des seiner Lenkbewegung entgegenwirkenden Lenkmoments und nimmt dies als ein "Rucken" in der Lenkung war, wodurch der Fahrkomfort erheblich beeinträchtigt wird.

Es ist daher erforderlich, Lenkwinkelgeber einzusetzen, welche die erforderliche hohe Auflösung und zudem eine hohe Genauigkeit besitzen, um den Zusatzlenkwinkel präzise und für den Fahrer nicht spürbar einstellen zu können.

Dabei sind zumindest zwei Lenkwinkelgeber erforderlich, von denen beispielsweise einer den von dem Fahrer eingestellten Lenkradwinkel und der andere den Summenlenkwinkel erfasst.

Da sich das Lenkrad sowie die Lenkwelle üblicherweise ausgehend von der Geradeausstellung mindestens um zwei volle Umdrehungen im Uhrzeigersinn und entgegen dem Uhrzeigersinn verdrehen lassen, müssen diese Sensoren zudem "muliturnfähig" sein, d.h. die Lenkwinkel insbesondere in einem Winkelbereich von mindestens -720° bis +720° eindeutig erfassen.

Üblicherweise wird zudem ein weiterer Winkelgeber eingesetzt, um den Drehwinkel der Motorwelle des Stellmotors zu bestimmen, der ebenfalls einen in einem Winkelbereich liegt, der mehr als eine volle Umdrehung bzw. mehr als 360° umfasst.

Dabei besteht jedoch das Problem, dass derzeit aus der Großserienproduktion erhältliche absolut messende muliturnfähige Lenkwinkelgeber, wie sie beispielsweise in herkömmlichen ESP-Systemen zum Ermitteln des Lenkradwinkels eingesetzt werden, nicht die erforderliche Genauigkeit und Auflösung erreichen.

Es muss daher auf sehr kostenintensive Winkelgeber zurückgegriffen werden, welche die erforderliche hohe Auflösung und Genauigkeit aufweisen, was jedoch insbesondere im Hinblick auf eine Großserienproduktion wirtschaftlich sehr nachteilig ist.

Es ist daher eine Aufgabe der vorliegenden Erfindung, die Genauigkeit der Lenkwinkelmessung bei einer Überlagerungslenkung möglichst einfach und insbesondere auch bei Fahrzeugen, die in Großserienproduktion hergestellt werden, zu erhöhen.

Erfindungsgemäß wird diese Aufgabe durch ein Verfahren mit den Merkmalen des Patentanspruchs 1 gelöst.

Demgemäß ist es vorgesehen, dass ein Verfahren der eingangs genannten Art so durchgeführt wird, dass der Summenlenkwinkel mittels eines getriebeausgangsseitig an der Lenkwelle angeordneten inkremental messenden Lenkwinkelgebers ausgehend von einem Ausgangswert ermittelt wird, wobei der Ausgangswert beim Einschalten des Lenksystems aus im Wesentlichen zeitgleich mit einem zuvor erfolgten Ausschalten des Lenksystems erfassten und abgespeicherten Werten für den Lenkradwinkel und den Summenlenkwinkel sowie einem im Wesentlichen zeitgleich mit dem Einschalten des Lenksystems mittels des Lenkradwinkelgebers erfassten Wert des Lenkradwinkels bestimmt wird.

Die Erfindung basiert somit auf der Idee, zur Messung des Summenlenkwinkels einen inkremental messenden Lenkwinkelgeber einzusetzen. Derartige Winkelgeber mit einer hohen Auflösung werden bereits in der Großserienproduktion hergestellt und sind damit preisgünstig verfügbar. Damit wird eine hochaufgelöste Messung des Summenlenkwinkels für Fahrzeuge möglich, die in einer Großserienproduktion hergestellt werden. Der Zusatzlenkwinkel, der üblicherweise als Differenz zwischen dem gemessenen Wert des Summenlenkwinkels und einem berechneten Sollwert ermittelt wird, kann auf diese Weise in sehr geringen Schrittweiten aktualisiert und damit so eingestellt wird, das der Fahrer dies nicht spürt.

Da mittels des inkremental messenden Lenkwinkelgebers jedoch direkt keine absoluten Werte für den Summenlenkwinkel, sondern lediglich Veränderungen des Wertes des Summenlenkwinkels ermittelt werden können, sieht die Erfindung vorteilhaft vor, bereits beim Einschalten des Lenksystems einen Ausgangswert zur Bestimmung des Summenlenkwinkels aus den Werten des Lenkradwinkels und des Summenlenkwinkels sowie dem beim Einschalten des Lenksystems erfassten Wert des Lenkradwinkels zu bestimmen. Dabei wird der Umstand ausgenutzt, dass der Stellmotor im ausgeschalteten Zustand verriegelt ist, so dass der Zusatzlenkwinkel im ausgeschalteten Zustand des Stellmotors nicht verändert werden kann. Während der Stellmotor ausgeschaltet ist, kann eine Veränderung des Summenlenkwinkels somit lediglich durch eine Veränderung des Lenkradwinkels herbeigeführt werden, so dass sich der beim Einschalten des Lenksystems vorliegende Wert des Summenlenkwinkels aus den Werten des Summenlenkwinkels und des Lenkradwinkels, die beim Ausschalten des Lenksystems vorlagen, sowie dem aktuellen Wert des Lenkradwinkels bestimmen lässt.

Ausgehend von dem derart ermittelten Ausgangswert kann der Summenlenkwinkel dann nach Maßgabe der Inkrementalsignale des inkremental messenden Lenkwinkelgebers der Absolutwert des Summenlenkwinkels bestimmt werden.

In einer weiteren bevorzugten Ausführungsform der Erfindung ist es vorgesehen, dass der Wert des Zusatzlenkwinkels aus dem mittels des inkremental messenden Lenkwinkelgebers bestimmten Wert des Summenlenkwinkels und dem mittels des Lenkradwinkelgebers gemessenen Wert des Lenkradwinkels bestimmt wird.

In dieser Ausführungsform der Erfindung kann somit auf einen zusätzlichen Winkelgeber zum Erfassen des Zusatzlenkwinkels verzichtet werden.

In einer gleichfalls bevorzugten Ausführungsform der Erfindung ist es vorgesehen, dass aus dem Zusatzlenkwinkel eine vorliegende Anzahl der Umdrehungen, welche eine Motorwelle des Stellmotors ausgehend von einer Nullstellung aufweist, bestimmt wird und dass die Winkelstellung der Motorwelle innerhalb eines genau eine Umdrehung umfassenden Winkelbereichs mittels eines an der Motorwelle angeordneten Motorwinkelgebers bestimmt wird.

Auf diese Weise kann zur Messung der Winkelstellung der Motorwelle des Stellmotors ein nicht-mulitturnfähiger Motorwinkelgeber eingesetzt werden, wobei die Anzahl der vorliegenden Umdrehung, welche die Motorwelle ausgehend von der Nullstellung aufweist, aus dem Summenlenkwinkel und dem Lenkradwinkel bestimmt wird. Unter der Nullstellung wird dabei eine vorgegebenen Winkellage der Motorwelle verstanden, insbesondere die Winkellage, bei welcher der Zusatzlenkwinkel den Wert 0° besitzt.

In einer besonders zweckmäßigen Ausführungsform der Erfindung ist es dabei vorgesehen, dass die Winkelstellung der Motorwelle aus der bestimmten Anzahl der Umdrehung und aus den Signalen des Motorwinkelgebers ermittelt wird.

In einer vorteilhaften Ausführungsform der Erfindung ist es ferner vorgesehen, dass der Wert des Summenlenkwinkels auf einen vorgegebenen Referenzwert korrigiert wird, wenn ein Referenzsignal auftritt, das ausgelöst wird, wenn die Lenkwelle getriebeausgangsseitig eine von mehreren vorgegebenen Winkelstellungen einnimmt.

In dieser Ausführungsform der Erfindung ist es insbesondere möglich, Lenkradwinkelgeber einzusetzen, die weniger genau sind, wie beispielsweise die derzeit üblicherweise eingesetzten Standard-Lenkradwinkelgeber des ESP-Systems. Dabei lässt sich der Ausgangswert für die Bestimmung des Summenlenkwinkels mit Hilfe des inkremental messenden Lenkwinkelgebers zwar nur mit der geringeren Genauigkeit des ESP-Lenkradwinkelgebers messen, es erfolgt jedoch eine Korrektur des Wertes des Summenlenkwinkels, nach der die Genauigkeit bei der Lenkwinkelerfassung erhöht ist.

Das Referenzsignal wird dabei vorzugsweise durch die Erfassung wenigstens einer in einer vorgegebenen Position auf einem Umfang der Lenkwelle angeordneten Referenzmarke mittels eines Referenzmarkensensor ausgelöst.

In einer bevorzugten Ausführungsform der Erfindung ist es dabei vorgesehen, dass die Referenzmarke erfasst wird, wenn die Lenkwelle getriebeausgangsseitig in eine Geradeausstellung gebracht wird.

Unter der Geradeausstellung wird dabei eine Winkelstellung verstanden, in der die lenkbaren Räder des Fahrzeugs parallel zur Fahrzeuglängsachse ausgerichtet sind. Diese Winkelstellung entspricht dabei Werten des Summenlenkwinkels von 0°, $\pm 360°$ und $\pm 720°$.

Da sich gezeigt hat, dass die Lenkwelle in der Regel schon kurzzeitig nach einem Zündungsneustart des Fahrzeugs in die Geradeausstellung gebracht wird, erfolgt auch die Korrektur des Wertes des Summenlenkwinkels in der Regel bereits kurzzeitig nach einem Zündungsstart.

In einer weiteren bevorzugten Ausführungsform der Erfindung ist es zudem vorgesehen, dass mehrere Referenzmarken jeweils in einer Position auf dem Umfang der Lenkwelle angeordnet sind.

In dieser Ausführungsform der Erfindung ergibt sich eine Vielzahl von Referenzwerten für den Summenlenkwinkel, insbesondere auch solche, die nicht der Geradeausstellung der Lenkwelle entsprechen, so dass eine zeitnahe Korrektur des Wertes des Summenlenkwinkels auch dann möglich ist, wenn die Lenkwelle nach einem Zündungsstart zunächst nicht in die Geradeausstellung gebracht wird, beispielsweise weil der Fahrer das Fahrzeug in eine Kurve lenkt.

Zweckmäßigerweise ist dabei vorgesehen, dass mehrere Referenzwerte des Summenlenkwinkels vorgegeben werden und beim Auftreten eines Referenzsignals eine Korrektur des Summenlenkwinkels auf den Referenzwert erfolgt, welcher dem ermittelten Wert des Summenlenkwinkels am nächsten liegt.

In einer besonders vorteilhaften Ausführungsform der Erfindung ist es weiterhin vorgesehen, dass der erste Anteil $a \cdot \delta_H$ des Lenkradwinkels $\delta_H$ aus dem mittels des inkremental messenden Lenkwinkelgebers ermittelten Summenlenkwinkel und dem mittels des Motorwinkelgebers ermittelten Zusatzlenkwinkel bestimmt wird, und ein zweiter Anteil $(1 - a) \cdot \delta_H$ des Lenkradwinkels $\delta_H$ mittels des Lenkradwinkelgebers bestimmt wird, wobei der Parameter $a$ einen Wert aus dem Intervall [0,1] besitzt.

Anhand des ersten Anteils, der insbesondere mittels des hochauflösenden inkremental messenden Lenkwinkelgebers ermittelt wird, kann dabei die Auflösung bei der Bestimmung des Lenkradwinkels gegenüber der Auflösung des Lenkradwinkelgebers erhöht werden. Da der inkremental messende Winkelgeber zur Bestimmung des Summenlenkwinkels jedoch ausgangsseitig des Überlagerungsgetriebes angeordnet ist, verändert sich der erste Anteil bei einer Lenkbewegung des Lenkrads aufgrund der Trägheit des Lenkstrangs und insbesondere des Überlagerungsgetriebes sowie aufgrund der Dauer der Berechnung nur mit einer gewissen Verzögerung. Dies kann anhand des zweiten Anteils kompensiert werden, der mittels des im Bereich des Lenkrads angeordneten und den Lenkradwinkel direkt messenden Lenkradwinkelgebers bestimmt wird.

Der Wert des Parameters $a$ ist dabei vorzugsweise veränderbar.

Vorzugsweise ist es ferner vorgesehen, dass der Wert des Parameters $a$ an die Auflösung des Lenkradwinkelgebers angepasst wird.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt

Fig. 1    den prinzipiellen Aufbau eines zur Durchführung der Erfindung geeigneten Lenksystems eines Fahrzeugs,

Fig. 2    ein Blockschaltbild eines Überlagerungsgetriebes,

Fig. 3    eine schematische Darstellung einer Ausführungsform eines inkremental messenden Winkelgebers,

Fig. 4    ein Blockschaltbild eines im Rahmen der Erfindung vorgesehenen Lenksystems in einer ersten Ausführungsform und

Fig. 5    ein Blockschaltbild eines im Rahmen der Erfindung vorgesehenen Lenksystems in einer zweiten Ausführungsform.

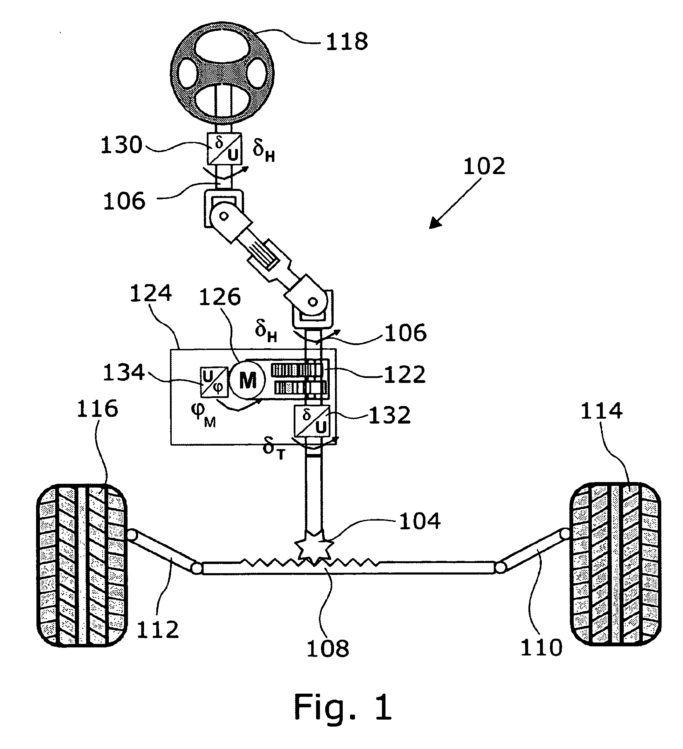

Die in der Figur 1 schematisch dargestellte Lenkanlage eines Fahrzeugs ist als Ganzes mit der Bezugsziffer 102 versehen. In der beispielhaft dargestellten Ausgestaltung ist die Lenkanlage 102 als Zahnstangenlenkung ausgebildet, bei der ein Ritzel 104, das an einem unteren Teil 106 der Lenkwelle angebracht ist, in eine Zahnstange 108 eingreift, die seitlich an der Zahnstange 108 befestigte Spurstangen 110, 112 betätigt, und dadurch ein Verschwenken der Räder 114, 116 bewirken kann. Im Rahmen der Erfindung können jedoch selbstverständlich auch andere dem Fachmann bekannte Lenkanlagen, wie beispielsweise Kugelumlauflenkungen, eingesetzt werden.

Das von dem Fahrer betätigte Lenkrad 118 ist direkt oder über eine weitere Welle mit dem oberen Teil 120 der Lenkwelle verbunden, wobei die Winkelstellung des oberen Teils 120 der Lenkwelle dem Lenkradwinkel entspricht, der im Folgenden mit $\delta_H$ bezeichnet wird.

Per üblicher Konvention ist dabei der Geradeausstellung des Lenkrades 118 bzw. der Lenkwelle 106, 120, d.h. der Stellung, in der die Räder 114, 116 - ohne einen fremdkraftgesteuerten Eingriff in die Lenkanlage 102 - parallel zur Fahrzeuglängsachse ausgerichtet sind, ein Lenkradwinkel von 0° zugeordnet. Bei einer Drehung des Lenkrads 118 bzw. der Lenkwelle 106, 120 entgegen dem Uhrzeigersinn vergrößert sich der Lenkradwinkel $\delta_H$ und bei einer Drehung im Uhrzeigersinn verringert er sich.

Üblicherweise sind das Lenkrad 118 und die Lenkwelle 106, 120 dabei in einem Winkelbereich von -720° bis +720° drehbar, d.h. sie lassen sich ausgehend von der Geradeausstellung um zwei volle Umdrehungen im Uhrzeigersinn und um zwei volle Umdrehungen entgegen dem Uhrzeigersinn drehen.

Der obere Teil 106 der Lenkwelle ist mit dem Eingang eines Überlagerungsgetriebes 122 verbunden, welches in die Lenkwelle eingesetzt ist und eine Komponente einer Überlagerungslenkung 124 darstellt. Ausgangsseitig ist das Überlagerungsgetriebe 122 mit dem unteren Teil 120 der Lenkwelle verbunden, an der das in die Zahnstange 108 eingreifende Ritzel 104 angebracht ist.

Mittels des Überlagerungsgetriebes 122 ist es möglich, fremdkraftgesteuert einen Zusatzlenkwinkel $\Delta\delta$ in den Lenkstrang einzusteuern, der dem getriebeeingangsseitig vorliegenden, vom Fahrer eingestellten Lenkradwinkel $\delta_H$

überlagert wird. Getriebeausgangsseitig ergibt sich dabei ein Lenkwinkel $\delta_T$, welcher der Summe aus dem Lenkradwinkel $\delta_H$ und dem Zusatzlenkwinkel $\Delta\delta$ entspricht und hier daher auch als Summenlenkwinkel bezeichnet wird.

Eingestellt wird der Zusatzlenkwinkel $\Delta\delta$ mittels des Stellmotors 126, bei dem es sich vorzugsweise um einen elektronisch kommutierten Elektromotor handelt. Die Winkelstellung der Motorwelle wird dabei im Folgenden als Motorwinkel $\varphi_M$ bezeichnet.

Die Motorwelle lässt sich dabei in der Regel ebenfalls ausgehend von der Nullstellung mit einem Motorwinkel von $\varphi_M = 0°$, in welcher auch der Zusatzlenkwinkel $\Delta\delta$ einen Wert von 0° annimmt, um mehr als eine volle Umdrehung in und entgegen dem Uhrzeigersinn drehen, so dass auch der Wertebereich des Motorwinkels $\varphi_M$ mehr als 360° umfasst.

Unter Berücksichtigung des mechanischen Übersetzungsverhältnisses $\nu_1$, mit dem von dem Lenkrad aus über das Überlagerungsgetriebe auf die Lenkung durchgegriffen wird, sowie des Übersetzungsverhältnisses $\nu_2$, mit dem der Stellmotor auf die Lenkung durchgreift, ergibt sich dabei ein Summenlenkwinkel von

$$\delta_T = \nu_1\delta_H + \nu_2\varphi_M \qquad\qquad (1),$$

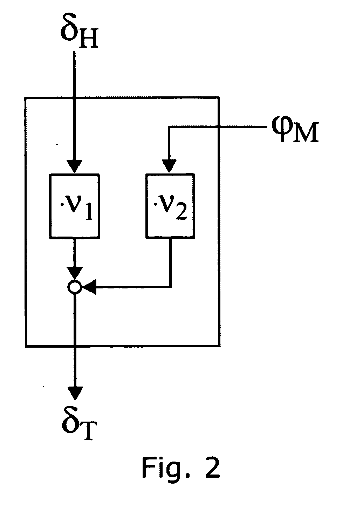

wie auch dem in Figur 2 dargestellten Blockschaltbild zu entnehmen ist, in dem neben den Eingangsgrößen $\delta_H$ und $\varphi_M$ sowie der Ausgangsgröße $\delta_T$ die Multiplikationen der Eingangsgrößen mit den Übersetzungsverhältnissen $\nu_1$ und $\nu_2$ anhand der Multiplikationsblöcke 202 und 204 dargestellt sind. Der Zusatzlenkwinkel ist dabei durch $\Delta\delta = \nu_2\varphi_M$ gegeben.

Zur Erfassung des Lenkradwinkels $\delta_H$ ist ein Winkelgeber 130 vorgesehen, der eingangsseitig des Überlagerungsgetriebes 122 am oberen Teil 120 der Lenkwelle angeordnet ist. Dabei kann es sich beispielsweise um den Standard-Lenkradwinkelgeber eines ESP-Systems (ESP: Elektronisches Stabilitätsprogramm) handeln, der bei diesem System dazu verwendet wird, den Fahrerlenkwunsch zu ermitteln, der als Eingangsgröße eines bei dem ESP-System verwendeten Fahrzeugreferenzmodells dient.

Der Lenkradwinkelgeber 130 ist in einer dem Fachmann bekannten Art als elektro-mechanischer, magnetischer oder optischer Winkelgeber ausgeführt. Beispielsweise handelt es um einen Hall-Lenkradwinkelgeber, bei dem radial bezüglich des oberen Teils 120 der Lenkwelle angeordnete Hall-Sensoren das magnetische Feld eines benachbarten Magneten erfassen, das von einer aus weichmagnetischem Material gefertigten Codescheibe moduliert wird, die konzentrisch an dem oberen Teil 120 der Lenkwelle befestigt ist.

Derartige, heute in herkömmlichen ESP-Systemen eingesetzte Winkelgeber haben üblicherweise eine Genauigkeit von ca. 4,5° und eine Auflösung von ca. 1,5°.

Zur Erfassung des Summenlenkwinkels $\delta_T$ ist im Rahmen der Erfindung ein inkremental messender Winkelgeber 132 vorgesehen, der ausgangsseitig des Überlagerungsgetriebes 122 am unteren Teil 106 der Lenkwelle angebracht ist.

Der Summenlenkwinkelgeber 132 kann beispielsweise als optischer oder magnetischer Winkelgeber ausgebildet sein, bei dem eine ringförmige Inkrementalspur mit einer regelmäßigen Struktur durch einen Inkrementalsensor abgetastet wird. Er verfügt ferner über einen Referenzmarkensensor, der wenigstens eine Referenzmarke erfasst, die in einer vorgegebenen Position auf dem Umfang der Inkrementalspur in einer vorgegebenen Position auf dem Umfang einer ringförmigen Spur angeordnet ist.

Die Referenzmarke ist dabei so auf der ringförmigen Spur angeordnet, dass sie von dem Referenzmarkensensor erfasst wird, wenn der untere Teil 106 der Lenkwelle eine vorgegebene Winkelstellung einnimmt, bei der es sich vorzugsweise um die Geradeausstellung handelt, die insbesondere einem Summenlenkwinkel von $\delta_T = 0°$ entspricht. Es können hier jedoch selbstverständlich auch andere Winkelstellungen als die Geradeausstellung vorgegeben werden.

Da der untere Teil 106 der Lenkwelle - wie auch das Lenkrad 118 bzw. der obere Teil 120 der Lenkwelle - ausgehend von der Geradeausstellung um zwei volle Umdrehungen im und entgegen dem Uhrzeigersinn gedreht werden kann, ist die Referenzmarke jedoch nicht eindeutig einem Referenzwert des Summenlenkwinkels $\delta_T$ zugeordnet, sondern wird vielmehr in mehreren Winkelstellungen des unteren Teils 106 der Lenkwelle erfasst, die sich jeweils um 360° unterscheiden.

Wird die Referenzmarke in der Geradeausstellung des unteren Teils 106 der Lenkwelle insbesondere bei einem Referenzwert des Summenlenkwinkels $\delta_T$ von 0° erfasst, treten somit weitere Referenzwerte von -360° und +360° sowie -720° und +720° auf, die ebenfalls der Geradeausstellung des unteren Teils 106 der Lenkwelle zugeordnet werden können.

Neben der Referenzmarke, die in der Position auf dem Umfang der Inkrementalspur bzw. der weiteren Spur des Winkelgebers 132 angeordnet ist, in der sie in der Geradeausstellung erfasst wird, können zudem weitere Referenzmarken in vorgegebenen Positionen auf dem Umfang der Inkrementalspur bzw. der zweiten Spur des Winkelgebers 132 angeordnet sein, denen jeweils mehrere, sich jeweils um 360° unterscheidende Referenzwerte des Summenlenkwinkels $\delta_T$ zugeordnet sind.

Ein erstes Ausgangssignal des Winkelgebers 132, das im Folgenden als Inkrementalsignal bezeichnet wird, wird von dem Inkrementalsensor geliefert und besteht aus einer Abfolge von Impulsen, wobei der untere Teil 106 der Lenkwelle zwischen dem Auftreten zweier Impulse um einen vorgegebenen Winkelbetrag gedreht wurde. Die Drehrichtung ist dem Inkrementalsignal ebenfalls entnehmbar.

Ein zweites Ausgangssignal des Winkelgebers 132 wird von dem Referenzmarkensensor geliefert, wenn dieser von einer Referenzmarke passiert wird.

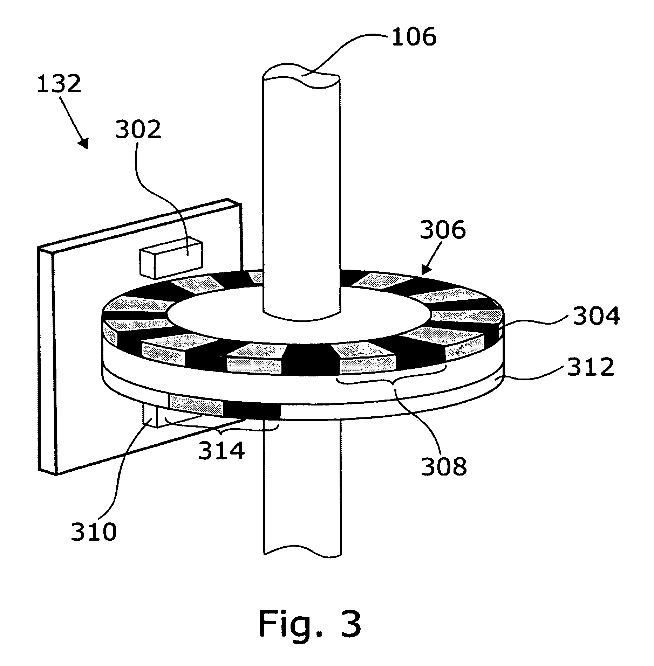

Eine Ausgestaltung des inkremental messenden Winkelgebers 132 ist beispielhaft in der Figur 3 dargestellt. Der Winkelgeber 132 enthält in dieser Ausführungsform einen magnetoresistiven Inkrementalsensor (MR-Sensor) 302, der die Inkrementalspur 304 eines in konzentrischer Anordnung an dem unteren Teil 106 der Lenkwelle befestigten Polrads 306 abtastet, das unmittelbar benachbarte Polpaare gleicher Pollänge aufweist, die jeweils aus einem magnetischen Nordpol (schwarz gefärbt) und einem magnetischen Südpol (grau gefärbt) bestehen. Ein beispielhaft herausgegriffenes Polpaar ist dabei in der Figur 3 mit der Bezugsziffer 308 bezeichnet.

Der Referenzmarkensensor 310 ist in einer vorteilhaften Ausführungsform der Erfindung ebenfalls als ein MR-Sensor ausgeführt, der eine zweite Spur 312 des Polrades 306 abtastet, die ein einzelnes, in einem vorgegebenen Winkelsegment des Polrades 306 angeordnetes Polpaar 314 aufweist, welches die Referenzmarke bildet. Entsprechend sind bei Verwendung mehrerer Referenzmarken mehrere Polpaare 314 in vorgegebenen Winkelabständen bzw. innerhalb vorgegebener, zueinander beabstandeter Winkelsegmente auf der zweiten Spur 312 des Polrads 306 angeordnet.

Alternativ kann es auch vorgesehen sein, dass die Referenzmarken durch magnetische Unregelmäßigkeiten am Rand der Inkrementalspur 304 des Polrades 306 gebildet werden, die von dem Referenzmarkensensor 310 erfasst werden.

Die MR-Sensoren sind in einer dem Fachmann bekannten Weise ausgebildet und verfügen vorzugsweise über zwei um 45° gegeneinander gedrehte Sensorbrücken, die beim Passieren eines Polpaares 308, 314 jeweils ein sinus- bzw. kosinusförmiges Ausgangssignal liefern, wobei die Signale zur Auswertung vorzugsweise interpoliert werden.

Durch eine Auswertung der Phasenlagen bzw. der Lage der Signalflanken zueinander kann mit einem derartigen Sensor die Winkelstellung innerhalb des von einem Polpaar 308, 314 überdeckten Winkelbereichs eindeutig bestimmt werden und der Drehsinn, mit dem das Polrad 306 gedreht wird, ermittelt werden.

Derart ausgestaltete Inkrementalwinkelgeber können heutzutage bereits mit einer hohen Genauigkeit von ca. 1° und einer hohen Auflösung von ca. 0,1° kostengünstig in großen Stückzahlen gefertigt werden, und ermöglichen daher auch im Großserieneinsatz eine sehr genaue und hoch aufgelöste Winkelmessung.

Zur Erfassung des Motorwinkels $\varphi_M$ ist ein weiterer ein Motorwinkelgeber 134 vorgesehen. In einer bevorzugten Ausgestaltung handelt es sich bei dem Motorwinkelgeber 134 um einen Kommutierungssensor, der in einer dem Fachmann an sich bekannten Art ausgeführt ist. Um den Motorwinkelgeber 134 möglichst einfach zu gestalten, ist dieser nicht muliturnfähig ausgeführt, so dass er eine eindeutige Winkelmessung nur in einem 360° umfassenden Winkelbereich erlaubt.

Mit den Winkelgebern 130, 132 und 134 ist eine in den Figuren nicht dargestellte Auswerte- und Steuereinheit signalmäßig verbunden, die beispielsweise auch zur Steuerung des Stellmotors 126 vorgesehen sein kann.

Ausgehend von einem Ausgangswert ermittelt die Auswerte- und Steuereinheit oder eine in den Summenlenkwinkelgeber 132 integrierte Auswerteelektronik insbesondere die Winkelstellung des unteren Teils 106 der Lenkwelle aus dem Inkrementalsignal des Summelenkwinkelgebers 132, indem sie den Wert des Summenlenkwinkels $\delta_T$ nach Maßgabe des Inkrementalsignals entsprechend des Drehsinns, in dem der untere Teil 106 der Lenkwelle gedreht wird, in jedem Messschritt inkrementiert oder dekrementiert.

Da beim Einschalten des Lenksystems, das üblicherweise beim einem Zündungsstart an dem Fahrzeug erfolgt, jedoch bereits ein zuvor eingestellter Zusatzlenkwinkel $\Delta\delta$ vorliegen kann, ist es bei der Erfindung vorgesehen, den Ausgangswert für die Bestimmung des Summenlenkwinkels $\delta_T$ anhand der unmittelbar vor dem vorherigen Abschalten des Lenksystems vorliegenden Werte für den Summenlenkwinkel $\delta_T$ und den Lenkradwinkel $\delta_H$ zu ermitteln.

Hierfür werden beim Ausschalten des Lenksystems, insbesondere beim Abschalten des Lenksystems im Rahmen eines Shut-Down-Vorgangs der Wert $\delta_{H,0}$ des Lenkradwinkels $\delta_H$ sowie der Wert $\delta_{T,0}$ des Summenlenkwinkels $\delta_T$ in einem nicht-flüchtigen Speicher der Auswerte- und Steuereinheit abgespeichert. Dieser kann dabei beispielsweise als EEPROM (Electrically Erasable Programmable Read Only Memory) ausgeführt sein.

Der Stellmotor 126 der Überlagerungslenkung 124 ist bei ausgeschaltetem Lenksystem bzw. im ausgeschalteten Zustand der Überlagerungslenkung 124 verriegelt, so dass der Zusatzlenkwinkel $\Delta\delta$ - im Gegensatz zu dem Lenkradwinkel $\delta_H$ - bei ausgeschalteter Elektronik nicht verändert werden kann. Die Verriegelung des Stellmotors 126 ergibt sich beispielsweise aufgrund der Verwendung eines selbsthemmenden Getriebes und/oder dem Einsatz einer anderen dem Fachmann bekannten Verriegelung für den Stellmotor 126.

Bei einem Einschalten des Lenksystems liest die Auswerte- und Steuereinheit die gespeicherten Werte $\delta_{H,0}$ und $\delta_{T,0}$ der Lenkwinkel $\delta_H$ und $\delta_T$ aus dem nicht-flüchtigen Speicher aus, und fragt den aktuell vorliegenden Lenkradwinkel $\delta_H$ von dem Lenkradwinkelgeber 130 ab. Aus diesen Größen berechnet die Auswerteeinheit dann den Summenlenkwinkel $\delta_T$, für den gilt:

$$\delta_T = \delta_{T.0} + \nu_1(\delta_H - \delta_{H.0}) \qquad\qquad (2)$$

Dieser Wert des Summenlenkwinkels $\delta_T$ wird als Ausgangswert für die Bestimmung des Summenlenkwinkels $\delta_T$ mittels des inkremental messenden Summenlenkwinkelgebers 132 zugrunde gelegt.

Ferner ist beim Einschalten der Elektronik die Anzahl der Umdrehungen, welche die Welle des Stellmotors 126 ausgehend von der Nullstellung aufweist, zunächst nicht bekannt. Daher ist es bei der Initialisierung während des Einschaltens des Lenksystems vorgesehen, den Zusatzlenkwinkel $\Delta\delta$ bzw. den Motorwinkel $\varphi_M$ aus dem zuvor mittels des Lenkradwinkelgebers 130 ermittelten Wert des Lenkradwinkels $\delta_H$ und dem ermittelten Wert des Summenlenkwinkels $\delta_T$ anhand der Gleichung

$$\varphi_M = \frac{\delta_T - \nu_1 \delta_H}{\nu_2} \qquad\qquad (3)$$

zu bestimmen.

Aus diesem Wert des Motorwinkels $\varphi_M$ kann dann die Anzahl der Umdrehungen der Motorwelle ermittelt werden, welche die Motorwelle beim Einschalten des Lenksystems ausgehend von der Nullstellung aufweist.

Mit der Ermittlung des Ausgangswertes für die Bestimmung des Summenlenkwinkels $\delta_T$ und mit der Bestimmung der vorliegenden Anzahl der Umdrehungen der Motorwelle ist die Initialisierung des Lenksystems abgeschlossen.

Der Motorwinkel $\varphi_M$ wird dabei nachfolgend anhand der ermittelten Anzahl der Umdrehungen der Motorwelle und anhand der Signale des Motorwinkelgebers 134 ermittelt, aus deren Kombination sich der Wert des Motorwinkels $\varphi_M$ ergibt. Mittels des Winkelgebers 134 wird dabei insbesondere die Winkellage der Motorwelle innerhalb des 360° umfassenden Winkelbereichs einer Umdrehung bestimmt und derart mit der Anzahl der Umdrehungen kombiniert, dass der Wert des Motorwinkels $\varphi_M$ in dem gesamten Winkelbereich, in dem die Motorwelle drehbar ist, bestimmt wird. Der Wert des Motorwinkels $\varphi_M$ wird dabei insbesondere zur Motorsteuerung herangezogen.

Wird nach der Initialisierung des Lenksystems ein Referenzsignal in der Auswerte- und Steuereinheit empfangen, erfolgt eine Korrektur des Wertes des Summenlenkwinkels $\delta_T$, indem die Auswerte- und Steuereinheit zunächst denjenigen Referenzwert des Summenlenkwinkels $\delta_T$ ermittelt, der dem aktuellen Wert am nächsten liegt, und dann diesen Referenzwert als neuen Wert des Summenlenkwinkels $\delta_T$ übernimmt.

Sind beispielsweise die Referenzwinkel 0°, $\pm$ 360° und $\pm$ 720° vorgegeben und empfängt die Auswerte- und Steuereinheit beispielsweise bei Vorliegen eines Summenlenkwinkels von $\delta_T$=358,7° ein Referenzsignal, so wird der Summenlenkwinkel $\delta_T$ beim Empfang des Referenzsignals auf einen Wert von $\delta_T$=360° gesetzt, welches der Referenzwert ist, der dem aktuellen Wert von 358,7° am nächsten liegt. Entsprechend wird der Summenlenkwinkel $\delta_T$ beispielsweise auf den Wert $\delta_T$=0° gesetzt, wenn das Referenzsignal bei Vorliegen eines Summenlenkwinkels von $\delta_T$=0,9° empfangen wird.

Nach der Übernahme eines Referenzwertes als aktueller Wert des Summenlenkwinkels $\delta_T$ wird dieser wiederum nach der Maßgabe des Inkrementalsignals des Summenlenkwinkelgebers 132 durch ein Inkrementieren oder ein Dekrementieren des zuletzt bestimmten Wertes ermittelt.

Es erfolgt somit eine Anpassung des Wertes des Summenlenkwinkels $\delta_T$, wenn die Referenzmarke erstmals den Referenzmarkensensor 310 erreicht, so dass die Genauigkeit bei der nachfolgenden Bestimmung des Summenlenkwinkels der hohen Auflösung des Summenlenkwinkelgebers 132 entspricht.

Durch empirische Untersuchungen ist dabei herausgefunden worden, dass der Fahrer das Lenkrad 9 in der Regel bereits sehr kurzzeitig nach einem Zündungsstart bzw. nach dem Anfahren in die Geradeausstellung bringt, so dass auch der unteren Teil 106 der Lenkwelle frühzeitig nach einem Zündungsstart die Geradeausstellung einnimmt, und somit bereits nach einer kurzen Zeit eine Korrektur des zunächst ungenauen Wertes des Summenlenkwinkels $\delta_T$ möglich ist.

Wie bereits beschrieben, kann es jedoch auch vorgesehen sein, dass mehreren Stellungen des unteren Teils 106 der Lenkwelle jeweils eine Referenzmarke zugeordnet ist. Dabei können beispielsweise Referenzmarken in regelmäßigen Winkelabständen, d.h. in regelmäßigen Abständen auf dem Umfang des Polrads 306, angebracht sein. Die Winkelabstände müssen dabei lediglich größer sein als die Summe des maximal bei einer Lenkradwinkelmessung mit dem absolut messenden Lenkradwinkelgeber 130 auftretenden Messfehlers und der Ungenauigkeit in der Position der Referenzmarke, so dass beim Auftreten eines Referenzsignals eindeutig der tatsächlich vorliegende Referenzwert des Summenlenkwinkels $\delta_T$ ermittelt werden kann.

Bei Verwendung mehrerer Referenzmarken muss für eine Anpassung des Summenlenkwinkels $\delta_T$ nicht gewartet werden, bis der untere Teil 106 der Lenkwelle die Geradeausstellung einnimmt, sondern die Anpassung kann auch bei anderen Winkelstellungen vorgenommen werden. Hierdurch kann insbesondere auch dann eine frühzeitige Anpassung des Wertes des Summenlenkwinkels $\delta_T$ vorgenommen werden, wenn der Fahrer das Fahrzeug nach dem Zündungsstart in eine Kurve steuert, ohne dass die lenkbaren Räder 114, 116 des Fahrzeugs in die Geradeausstellung gebracht werden.

In vorteilhaften Ausführungsformen der Erfindung kann es zudem vorgesehen sein, dass die Auswerte- und Steuereinheit bei jedem Empfang eines Referenzsignals eine Korrektur des Wertes des Summenlenkwinkels $\delta_T$ vornimmt, die ebenfalls in der zuvor beschriebenen Weise vorgenommen wird. Durch diese wiederholte Kalibrierung des Summenlenkwinkelgebers 132 wird verhindert, dass die Genauigkeit des ermittelten Summenlenkwinkels $\delta_T$ mit zunehmender Messdauer geringer wird.

Darüber hinaus kann es vorgesehen sein, dass die Auswerte- und Steuereinheit bei jedem Empfang eines Referenzsignals überprüft, ob der aktuell vorliegende Wert des Summenlenkwinkels $\delta_T$ innerhalb eines vorgegebenen Toleranzbereichs mit dem Referenzwert übereinstimmt und eine Fehlermeldung ausgibt, wenn dies nicht der Fall ist.

Sind die Differenzen zwischen dem Wert des Summenlenkwinkels $\delta_T$ und allen bestehenden Referenzwerten größer als ein vorgegebener Schwellenwert, ist davon auszugehen, dass innerhalb der Sensorik ein Fehler vorliegt, und es wird ein Fehlersignal ausgegeben.

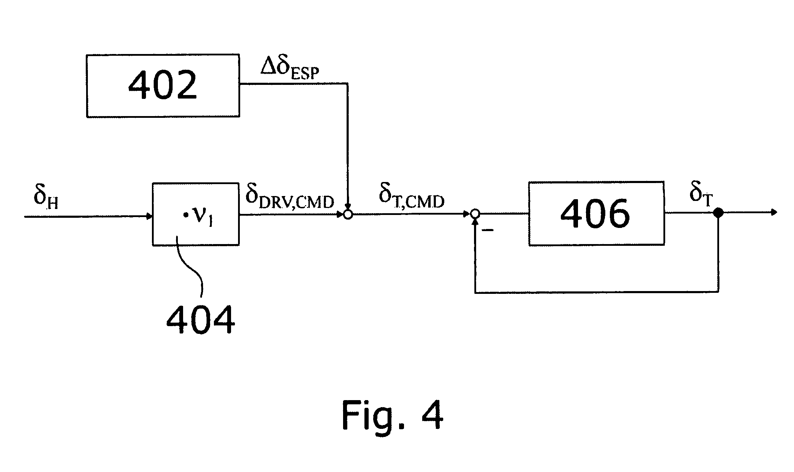

Der mittels des hochauflösenden Summenlenkwinkelgebers 132 bestimmte Summenlenkwinkel $\delta_T$ kann insbesondere als Regelgröße eines Lenkwinkelreglers dienen, welcher beispielsweise in der Auswerte- und Steuereinheit integriert ist und den Stellmotor 126 steuert. Ein Blockschaltbild eines Lenksystems mit einer Überlagerungslenkung 124, die über einen derartigen Lenkwinkelregler verfügt, ist dabei in Figur 4 dargestellt.

Wie aus Figur 4 ersichtlich, ergibt sich der Sollwert $\delta_{T,CMD}$ des Summenlenkwinkels $\delta_T$ aus dem von dem Fahrer vorgegebenen Lenkradwinkel $\delta_H$ und dem Zusatzlenkwinkel $\Delta\delta_{ESP}$, welcher beispielsweise in einem Fahrdynamikregler 402 bestimmt wird. Der Fahrdynamikregler 402 kann dabei insbesondere eine Gierratenregelung oder eine Gierratenkompensation in einer dem Fachmann grundsätzlichen bekannten Weise vornehmen, wobei der Zusatzlenkwinkel $\Delta\delta_{ESP}$ hierbei die Stabilität des Fahrzeugs erhöht.

Der Sollwert $\delta_{T,CMD}$ ist hier als die Summe aus dem Zusatzlenkwinkel $\Delta\delta_{ESP}$ und dem auf den unteren Teil 106 der Lenkwelle bezogenen Lenkradwinkel $\delta_{DRV,CMD}$ gegeben, der sich durch eine Multiplikation des Lenkradwinkels $\delta_H$ mit dem Übersetzungsverhältnis $\nu_1$ des Überlagerungsgetriebes ergibt, wie in Figur 4 anhand des Multiplikationsblocks 404 dargestellt ist.

Die von dem Lenkwinkelregler 406 auszuregelnde Regelabweichung ist die Abweichung zwischen dem Sollwert $\delta_{T,CMD}$ des Summenlenkwinkels $\delta_T$ und seinem in der zuvor beschriebenen Weise mittels des Summenlenkwinkelgebers 132 ermittelten Istwert.

Aus der Regelabweichung wird durch den Lenkwinkelregler 406 als Stellgröße der Zusatzlenkwinkel $\Delta\delta$ bzw. ein Motorwinkel $\varphi_M$ berechnet und am Stellmotor 126 der Überlagerungslenkung 124 eingestellt. Der Motorwinkel $\varphi_M$ entspricht dabei gerade der Regelabweichung des Summenlenkwinkels $\delta_T$, multipliziert mit dem Übersetzungsverhältnis $\nu_2$ zwischen der Welle des Stellmotors 126 und dem unteren Teil 106 der Lenkwelle.

Auf diese Weise wird mittels des Lenkwinkelreglers 406 zuverlässig ein Zusatzlenkwinkel $\Delta\delta$ eingestellt, welcher der Vorgabe $\Delta\delta_{ESP}$ des Fahrdynamikreglers 402 entspricht, indem Abweichungen des Istwerts des Summenlenkwinkels $\delta_T$ von der Vorgabe $\delta_{T,CMD}$ ausgeregelt werden.

Bei Einsatz des Standard-ESP-Lenkradwinkelgebers ist die Auflösung bei der Messung des Lenkradwinkels $\delta_H$, der insbesondere als Eingangsgröße für den Fahrdynamikregler 402 dient, in der Regel zu gering, um den Zusatzlenkwinkel $\Delta\delta_{ESP}$ so an den Lenkradwinkel $\delta_H$ anpassen zu können, dass die Eingriffe der Überlagerungslenkung 124 für den Fahrer nicht spürbar werden.

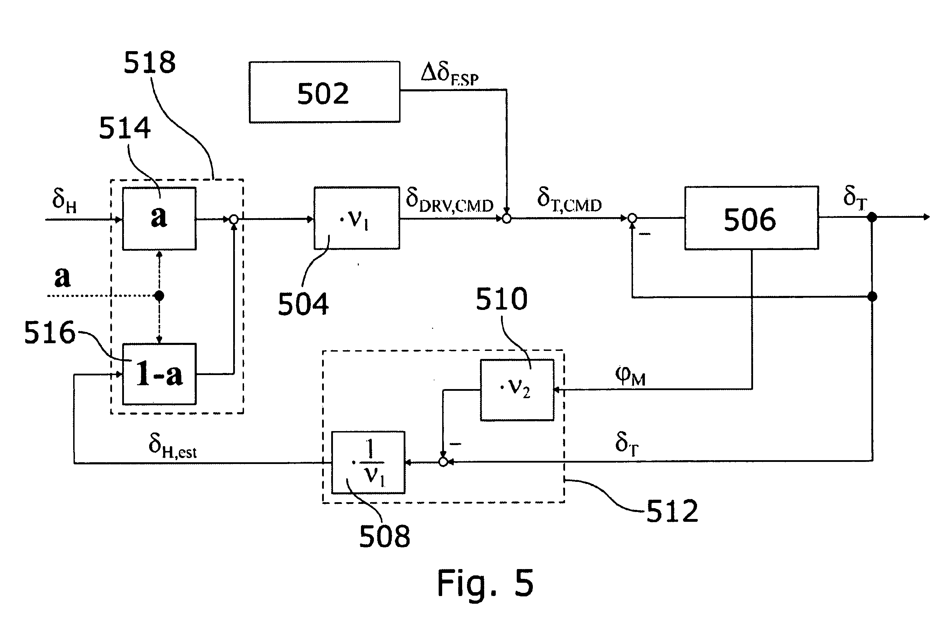

In einer besonders bevorzugten Ausführungsform der Erfindung, die im Folgenden anhand des in Figur 5 gezeigten Blockschaltbilds erläutert wird, ist es daher vorgesehen, dass zumindest ein Anteil des Lenkradwinkels $\delta_H$ aus dem mittels des Summenlenkwinkelgebers 132 ermittelten Summenlenkwinkel $\delta_T$ und dem mittels des Motorwinkelgebers 134 gemessenen Motorwinkel $\varphi_M$ bestimmt wird. Auf diese Weise lässt sich der Lenkradwinkel $\delta_H$ mit einer höheren Genauigkeit und Auflösung ermitteln, als dies mittels des Standard-ESP-Lenkradwinkelgebers möglich ist.

Grundsätzlich weist das in der Figur 5 dargestellte Lenksystem dabei einen zu dem in der Figur 4 dargestellten Lenksystem analogen Aufbau auf, d.h. es umfasst einen Fahrdynamikregler 502, mit dem ein Zusatzlenkwinkel $\Delta\delta_{ESP}$ berechnet wird, der zusätzlich zu der mittels des Lenkrads 118 eingestellten Winkelvorgabe $\delta_{DRV,CMD}$ des Fahrers am unteren Teil 106 der Lenkwelle eingestellt wird, wobei sich die Lenkwinkelvorgabe $\delta_{DRV,CMD}$ durch die anhand des Blocks 504 dargestellte Multiplikation des Lenkradwinkels $\delta_H$ mit dem Übersetzungsfaktor $\nu_1$ des Überlagerungsgetriebes 122 ergibt.

Die Einstellungen der Vorgabe $\delta_{T,CMD}$ für den Summenlenkwinkel $\delta_T$ geschehen auch hier mittels eines Lenkwinkelreglers 506, dem die Abweichung zwischen der Vorgabe $\delta_{T,CMD}$ und dem mittels des Summenlenkwinkelgebers 132 ermittelten Istwert des Summenlenkwinkels $\delta_T$ zugeführt wird. Zur Ausregelung der Abweichung wird dabei eine entsprechende Steuerung des Stellmotors 126 der Überlagerungslenkung 124 durch den Lenkwinkelregler 506 vorgenommen, wie es bereits zuvor im Zusammenhang mit Figur 4 beschrieben worden ist.

Zur Bestimmung des Lenkradwinkels $\delta_H$ wird bei dieser Ausführungsform von der Tatsache ausgegangen, dass dieser durch die Differenz zwischen dem auf den oberen Teil 120 der Lenksäule bezogenen Summenlenkwinkel $\delta_T$ und dem ebenfalls auf den oberen Teil 120 der Lenksäule bezogenen Motorwinkel $\varphi_M$ gegeben ist. Somit lässt sich ein Schätzwert $\delta_{H,est}$ für den Lenkradwinkel $\delta_H$ anhand der folgenden Beziehung aus diesen Größen bestimmen:

$$\delta_{H,est} = \tfrac{1}{v_1}\left(\delta_T - v_2\varphi_M\right) \qquad\qquad (4)$$

Die Berechnung dieses Schätzwertes erfolgt dabei in der aus den Multiplikationsblöcken 508 und 510 bestehenden Einheit 512, welcher der mittels des Summenlenkwinkelgebers 132 ermittelte Summenlenkwinkel $\delta_T$ sowie der mittels des Motorwinkelgebers 134 bestimmte Motorwinkel $\varphi_M$ als Eingangsgrößen dienen.

Mittels der insbesondere aus den Blöcken 514 und 516 bestehenden Einheit 518 kann vorgegeben werden, zu welchen Anteilen die Fahrerlenkvorgabe $\delta_{DRV,CMD}$ mittels des Lenkradwinkelgebers 132 und in der zuvor beschriebenen Weise aus dem Schätzwert $\delta_{H,est}$ für den Lenkradwinkel $\delta_H$ ermittelt wird.

Als Ausgangssignal der Einheit 518 ergibt sich dabei die Größe

$$\delta_{DRV,CMD} = a\delta_H + (1-a)\delta_{H,est} \qquad\qquad (5),$$

wobei für den Parameter *a* ein Wert aus dem Intervall [0,1] gewählt wird.

Anhand des Anteils $(1-a)\delta_{H,est}$ kann dabei die Auflösung bei der Bestimmung des Sollwerts für die Fahrerlenkvorgabe $\delta_{DRV,CMD}$ bei Einsatz eines weniger hochauflösenden Lenkradwinkelgebers 130, wie beispielsweise dem Standard-ESP-Lenkradwinkelgeber, erhöht werden.

Da die Winkelgeber 132 und 134 im Bereich des Überlagerungsgetriebes 122 bzw. ausgangsseitig des Überlagerungsgetriebes 122 angeordnet sind, verändert sich der Anteil $(1-a)\delta_{H,est}$ bei einer Lenkbewegung des Fahrers an dem Lenkrad 118 aufgrund der Trägheit des Lenkstrangs und insbesondere des Überlagerungsgetriebes 122. Eine weitere, wenn auch gegenüber der Dynamik der Lenkung vernachlässigbare Verzögerung ergibt sich aus der Dauer der Berechnung dieses Anteils in der Einheit 512.

Daher wird vorteilhaft der mittels des Lenkradwinkelgebers 130 gemessene Lenkradwinkel $\delta_H$ anteilig bei der Bestimmung der Fahrervorgabe des Lenkwinkels berücksichtigt, der zwar mit einer geringeren Auflösung, jedoch ohne Verzögerung ermittelt wird.

Der Wert des Parameters *a* wird dabei vorteilhaft in Abhängigkeit von der Auflösung des Lenkradwinkelgebers 130 vorgegeben, wobei er bei Einsatz eines hochauflösenden Lenkradwinkelgebers 130 nahe 1 und bei Einsatz eines weniger hochauflösenden Lenkradwinkelgebers 130 nahe 0 liegt.

**Patentansprüche**

1.  Verfahren zum Bestimmen eines Lenkwinkels in einem Lenksystem, das mit einem durch einen Stellmotor gesteuerten Überlagerungsgetriebe ausgestattet ist, mit dem getriebeausgangsseitig ein sich aus einem getriebeeingangsseitig eingestellten Lenkradwinkel und aus einem mittels des Stellmotors eingesteuerten Zusatzlenkwinkel zusammensetzender Summenlenkwinkel an einem getriebeausgangsseitigen Teil der Lenkwelle einstellbar ist, wobei der Stellmotor in einem ausgeschalteten Zustand des Lenksystems verriegelt ist und wobei der Lenkradwinkel mit einem getriebeeingangsseitig angeordneten Lenkradwinkelgeber erfasst wird, **dadurch gekennzeichnet, dass** der Summenlenkwinkel ($\delta_T$) mittels eines getriebeausgangsseitig an der Lenkwelle angeordneten inkremental messenden Lenkwinkelgebers (132) ausgehend von einem Ausgangswert ermittelt wird, wobei der Ausgangswert beim Einschalten des Lenksystems aus im Wesentlichen zeitgleich mit einem zuvor erfolgten Ausschalten des Lenksystems erfassten und abgespeicherten Wert ($\delta_{H,0}$; $\delta_{T,0}$) für den Lenkradwinkel ($\delta_H$) und den Summenlenkwinkel ($\delta_T$) sowie einem im Wesentlichen zeitgleich mit einem Einschalten des Lenksystems mittels des Lenkradwinkelgebers (130) erfassten Wert des Lenkradwinkels ($\delta_H$) bestimmt wird.

2.  Verfahren nach Anspruch 1, **dadurch gekennzeichnet, dass** der Wert des Zusatzlenkwinkels ($\Delta\delta$) aus dem mittels des inkremental messenden Lenkwinkelgebers (132) bestimmten Wertes des Summenlenkwinkels ($\delta_T$) und dem mittels des Lenkradwinkelgebers (130) gemessenen Wertes des Lenkradwinkels ($\delta_H$) bestimmt wird.

3.  Verfahren nach Anspruch 1 oder 2, **dadurch gekennzeichnet, dass** aus dem Zusatzlenkwinkel ($\Delta\delta$) eine vorlie-

gende Anzahl der Umdrehungen, welche eine Motorwelle des Stellmotors (126) ausgehend von einer Nullstellung aufweist, bestimmt wird, und dass die Winkelstellung der Motorwelle innerhalb eines genau eine Umdrehung umfassenden Winkelbereichs mittels eines an der Motorwelle angeordneten Motorwinkelgebers (134) bestimmt wird.

4. Verfahren nach einem der vorangegangenen Ansprüche, **dadurch gekennzeichnet, dass** die Winkelstellung ($\varphi_M$) der Motorwelle aus der bestimmten Anzahl der Umdrehung und aus den Signalen des Motorwinkelgebers (134) ermittelt wird.

5. Verfahren nach einem der vorangegangenen Ansprüche, **dadurch gekennzeichnet, dass** der Wert des Summenlenkwinkels ($\delta_T$) auf einen vorgegebenen Referenzwert korrigiert wird, wenn ein Referenzsignal auftritt, das ausgelöst wird, wenn die Lenkwelle (106, 120) getriebeausgangsseitig eine von mehreren vorgegebenen Winkelstellungen einnimmt.

6. Verfahren nach einem der vorangegangenen Ansprüche, **dadurch gekennzeichnet, dass** das Referenzsignal durch die Erfassung wenigstens einer in einer vorgegebenen Position auf einem Umfang der Lenkwelle (106, 120) angeordneten Referenzmarke (314) mittels eines Referenzmarkensensors ausgelöst wird.

7. Verfahren nach einem der vorangegangenen Ansprüche, **dadurch gekennzeichnet, dass** die Referenzmarke (314) erfasst wird, wenn der getriebeausgangsseitige Teil (106) der Lenkwelle (106, 120) in eine Geradeausstellung gebracht wird.

8. Verfahren nach einem der vorangegangenen Ansprüche, **dadurch gekennzeichnet, dass** mehrere Referenzmarken (314) jeweils in einer Position auf dem Umfang der Lenkwelle (106, 120) angeordnet sind.

9. Verfahren nach einem der vorangegangenen Ansprüche, **dadurch gekennzeichnet, dass** mehrere Referenzwerte des Summenlenkwinkels ($\delta_T$) vorgegeben werden und beim Auftreten eines Referenzsignals eine Korrektur des Summenlenkwinkels ($\delta_T$) auf den Referenzwert erfolgt, welcher dem ermittelten Wert des Summenlenkwinkels ($\delta_T$) am nächsten liegt.

10. Verfahren nach einem der vorangegangenen Ansprüche, **dadurch gekennzeichnet, dass** ein erster Anteil $a \cdot \delta_H$ des Lenkradwinkels $\delta_H$ aus dem mittels des inkremental messenden Lenkwinkelgebers (132) ermittelten Summenlenkwinkel ($\delta_T$) und dem mittels des Motorwinkelgebers (134) ermittelten Zusatzlenkwinkel ($\Delta\delta$) bestimmt wird, und ein zweiter Anteil $(1 - a) \cdot \delta_H$ des Lenkradwinkels $\delta_H$ mittels des Lenkradwinkelgebers (130) bestimmt wird, wobei der Parameter $a$ einen Wert aus dem Intervall [0,1] besitzt.

11. Verfahren nach einem der vorangegangenen Ansprüche, **dadurch gekennzeichnet, dass** der Wert des Parameters $a$ veränderbar ist.

12. Verfahren nach einem der vorangegangenen Ansprüche, **dadurch gekennzeichnet, dass** der Wert des Parameters $a$ an die Auflösung des Lenkradwinkelgebers (130) angepasst wird.

**Claims**

1. Method for determining a steering angle in a steering system, which is equipped with a superimposed gear, operated by a servo motor, by means of which gear, on the gear output side, a total steering angle is adjustable on a gear output side part of a steering shaft, which is composed of a steering wheel angle adjusted on the gear input side and an additional steering angle introduced by means of the servo motor, with the servo motor being locked in a disabled state of the steering system, and with the steering wheel angle being sensed by means of a steering wheel angle sensor arranged on the gear input side,
   **characterized in that** the total steering angle ($\delta_T$) is determined, based on an initial value, by means of a steering angle sensor (132) with incremental measurement that is arranged at the steering shaft on the gear output side, with the initial value, upon activation of the steering system, being determined from a value ($\delta_{H,0}$; $\delta_{T,0}$) for the steering wheel angle ($\delta_H$) and the total steering angle ($\delta_T$) detected and stored substantially synchronously with a previous deactivation of the steering system, as well as from a value of the steering wheel angle ($\delta_H$) that is detected by means of the steering wheel angle sensor (130) substantially synchronously with an activation of the steering system.

2. Method as claimed in claim 1,

**characterized in that** the value of the additional steering angle ($\Delta\delta$) is determined from the value of the total steering angle ($\delta_T$) determined by means of the steering angle sensor (132) with incremental measurement and the value of the steering wheel angle ($\delta_H$) measured by means of the steering wheel angle sensor (130).

3.  Method as claimed in claim 1 or 2,
    **characterized in that** a prevailing number of the rotations, which a motor shaft of the servo motor (126) exhibits based on a zero position, is determined from the additional steering angle ($\Delta\delta$), and **in that** the angular position of the motor shaft in an angle range covering exactly one rotation is determined by means of a motor angle sensor (134) arranged at the motor shaft.

4.  Method as claimed in any one of the preceding claims,
    **characterized in that** the angular position ($\varphi_M$) of the motor shaft is determined from the defined number of rotations and from the signals of the motor angle sensor (134).

5.  Method as claimed in any one of the preceding claims,
    **characterized in that** the value of the total steering angle ($\delta_T$) is corrected to a predetermined reference value when a reference signal occurs, which is triggered when the steering shaft (106, 120) on the gear output side assumes one of several predetermined angular positions.

6.  Method as claimed in any one of the preceding claims,
    **characterized in that** the reference signal is triggered by the detection of at least one reference mark (314) that is arranged in a predetermined position at a periphery of the steering shaft (106, 120), using a reference mark sensor.

7.  Method as claimed in any one of the preceding claims,
    **characterized in that** the reference mark (314) is detected when the part (106) of the steering shaft (106, 120) on the gear output side is moved to adopt a straight-ahead position.

8.  Method as claimed in any one of the preceding claims,
    **characterized in that** several reference marks (314) are respectively arranged in a position at the periphery of the steering shaft (106, 120).

9.  Method as claimed in any one of the preceding claims,
    **characterized in that** several reference values of the total steering angle ($\delta_T$) are predetermined, and **in that** when a reference signal appears, the total steering angle ($\delta_T$) is corrected to the reference value, which is closest to the established value of the total steering angle ($\delta_T$).

10. Method as claimed in any one of the preceding claims,
    **characterized in that** a first component $a \cdot \delta_H$ of the steering wheel angle $\delta_H$ is determined from the total steering angle ($\delta_T$) established by means of the steering angle sensor (132) with incremental measurement and the additional steering angle ($\Delta\delta$) established by means of the motor angle sensor (134), and a second component $(1 - a) \cdot \delta_H$ of the steering wheel angle $\delta_H$ is determined by means of the steering wheel angle sensor (130), with the parameter $a$ assuming a value of the interval [0,1].

11. Method as claimed in any one of the preceding claims,
    **characterized in that** the value of the parameter $a$ is variable.

12. Method as claimed in any one of the preceding claims,
    **characterized in that** the value of the parameter $a$ is adapted to the resolution of the steering wheel angle sensor (130).

**Revendications**

1.  Procédé à déterminer un angle de commande dans un système à direction prévu d'une transmission de superposition commandée par un servo moteur, par l'intermédiaire de laquelle un angle de commande de totaux composé par un angle de volant réglé à l'entrée de la transmission et d'un angle additionnel commandé par ledit servo moteur est réglable à une partie de l'arbre de commande à la sortie de la transmission, le servo moteur dans un état débrayé du système à direction étant bloqué et l'angle de volant étant déterminé par un transmetteur d'angle volant disposé à l'entrée de la transmission, **caractérisé en ce que** l'angle de commande de totaux ($\delta_r$) est déterminé, à partir d'une valeur initiale, par l'intermédiaire d'un transmetteur d'angle volant (132) mesurant de manière incrémentale et étant disposé à la sortie de la transmission sur l'arbre de commande, la valeur initiale étant déterminée à la mise en opération du système à direction d'une valeur ($\delta_{H,o}$; $\delta_{r,o}$) pour l'angle de volant ($\delta_H$) déterminée et mise en mémoire essentiellement en même temps avec un débrayage du système à direction effectué au préalable et pour l'angle de commande de totaux ($\delta_r$), et d'une valeur de l'angle de volant ($\delta_H$) déterminée essentiellement en même temps avec un embrayage du système à direction par l'intermédiaire du transmetteur de l'angle volant (130).

2. Procédé selon la revendication 1, **caractérisé en ce que** la valeur de l'angle additionnel ($\Delta\delta$) est déterminée de la valeur de l'angle de commande de totaux ($\delta_r$) déterminé par l'intermédiaire du transmetteur de l'angle de commande (132) mesurant de manière incrémental et de la valeur de l'angle volant ($\delta_H$) mesurée par l'intermédiaire du transmetteur de l'angle volant (130)

3. Procédé selon les revendications 1 ou 2, **caractérisé en ce qu'**un nombre de révolutions effectué par un arbre de moteur du servo moteur (126) à partir d'une position à zéro est déterminé de l'angle additionnel ($\Delta\delta$), et que la position angulaire de l'arbre de moteur dedans un secteur angulaire définissant précisément une révolution est déterminée par l'intermédiaire d'un transmetteur de l'angle moteur (134).

4. Procédé selon l'une des revendications précédentes, **caractérisé en ce que** la position angulaire ($\varphi_M$) de l'arbre moteur est déterminée du nombre de révolutions déterminé et des signaux du transmetteur (134).

5. Procédé selon l'une des revendications précédentes, **caractérisé en ce que** la valeur de l'angle de commande de totaux ($\delta_r$) est corrigée à une valeur de référence prédéterminée au cas d'un signal de référence déclenché si l'arbre de commande (106, 120) occupe à la sortie de transmission l'une position angulaire parmi de plusieurs de positions prédéterminées.

6. Procédé selon l'une des revendications précédentes, **caractérisé en ce que** le signal de référence est débrayé par la détermination au moins d'une marque de référence (314) disposée à une position prédéterminée sur la circonférence de l'arbre de commande (106, 120) par l'intermédiaire d'un palpeur de marque à référence.

7. Procédé selon l'une des revendications précédentes, **caractérisé en ce que** la marque de référence (314) est déterminée si la partie (106) de l'arbre de commande (106, 120) à la sortie de la transmission est mise dans une position droite.

8. Procédé selon l'une des revendications précédentes, **caractérisé en ce que** plusieurs de marques de référence (314) sont disposées à chacune des positions sur la circonférence de l'arbre de commande (106, 120).

9. Procédé selon l'une des revendications précédentes, **caractérisé en ce que** plusieurs de marques de référence de l'angle de commande de totaux ($\delta_r$) sont prédéterminé et qu'au cas de présence d'un signal de référence une correction de l'angle de commande de totaux ($\delta_r$) à la valeur de référence le plus proche à la valeur de l'angle de commande de totaux ($\delta_r$) déterminée est effectuée.

10. Procédé selon l'une des revendications précédentes, **caractérisé en ce qu'**une première partie *a.* $\delta_H$ de l'angle volant $\delta_H$ est déterminée de l'angle de commande de totaux ($\delta_r$) déterminé par l'intermédiaire du transmetteur (132) de l'angle commande mesurant de manière incrémentale et de l'angle additionnel ($\Delta\delta$) déterminé par l'intermédiaire du transmetteur (134) de l'angle moteur et qu'une partie secondaire (1 - *a*). $\delta_H$ de l'angle volant ($\delta_H$) est déterminée par l'intermédiaire du transmetteur de l'angle volant (130), le paramètre *a* ayant une valeur de l'intervalle [0,1].

11. Procédé selon l'une des revendications précédentes, **caractérisé en ce que** la valeur du paramètre *a* est variable.

12. Procédé selon l'une des revendications précédentes, **caractérisé en ce que** la valeur du paramètre *a* est ajustée à la dissolution du transmetteur de l'angle volant (130).

**Fig. 1**

Fig. 2

Fig. 3

Fig. 4

Fig. 5

**EP 1 796 947 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10032340 A1